# EUROPEAN PATENT SPECIFICATION

(11) **EP 4 482 048 B1**
(45) Date of publication and mention of the grant of the patent: **23.09.2026**
(21) Application number: 22927036.8
(22) Date of filing: 16.02.2022
(51) Int. Cl.: H04L 27/26, H04B 7/0456

(54) **WIRELESS COMMUNICATION METHOD, WIRELESS COMMUNICATION SYSTEM, AND TRANSMISSION DEVICE**
DRAHTLOSKOMMUNIKATIONSVERFAHREN, DRAHTLOSKOMMUNIKATIONSSYSTEM UND ÜBERTRAGUNGSVORRICHTUNG
PROCÉDÉ DE COMMUNICATION SANS FIL, SYSTÈME DE COMMUNICATION SANS FIL, ET DISPOSITIF DE TRANSMISSION

(43) Date of publication of application: 25.12.2024
(73) Proprietor: NTT, Inc., Tokyo 100-8116 (JP)
(72) Inventor: KURIYAMA, Keita, Musashino-shi, Tokyo 180-8585 (JP); FUKUZONO, Hayato, Musashino-shi, Tokyo 180-8585 (JP); MIYAGI, Toshifumi, Musashino-shi, Tokyo 180-8585 (JP); ONIZAWA, Takeshi, Musashino-shi, Tokyo 180-8585 (JP)
(74) Representative: Hoffmann Eitle
(86) International application number: PCT/JP2022/006202
(87) International publication number: WO 2023/157133

(56) References cited:
- JP-A- 2009 194 732
- JP-A- 2021 048 637
- US-A1- 2017 230 224
- US-A1- 2019 296 819
- SATOSHI SUYAMA ET AL: "Subcarrier Phase Hopping MIMO-OFDM Transmission Employing Enhanced Selected Mapping for PAPR Reduction", PERSONAL, INDOOR AND MOBILE RADIO COMMUNICATIONS, 2006 IEEE 17TH INTER NATIONAL SYMPOSIUM ON, IEEE, PI, 1 September 2006 (2006-09-01), pages 1 - 5, XP031023789, ISBN: 978-1-4244-0329-5
- BOONKAJAY AMNART ET AL: "A stream-wise blind selected mapping technique for low-PAPR multi-user MIMO transmission", 2017 IEEE/CIC INTERNATIONAL CONFERENCE ON COMMUNICATIONS IN CHINA (ICCC), IEEE, 22 October 2017 (2017-10-22), pages 1 - 6, XP033343466, DOI: 10.1109/ICCCHINA.2017.8330507
- ISHIDA, YUSUKE ET AL.: "B-5-77 PAPR Reduction by Subcarrier-Phase Hopping for MIMO-OFDM with Large Number of Subcarriers", PROCEEDINGS OF THE 2007 IEICE SOCIETY CONFERENCE (1); 2007.09.10-14, IEICE, JP, 29 August 2007 (2007-08-29) - 14 September 2007 (2007-09-14), JP, pages 399, XP009548330

## Description

### TECHNICAL FIELD

The present invention relates to a wireless communication technology. In particular, the present invention relates to a wireless communication technology for performing precoding on transmission data on a transmitting side.

### BACKGROUND ART

In wireless communication, a transmitting side may perform precoding on transmission data. For example, when wideband transmission is performed in a frequency-selective fading environment, channel equalization is performed by precoding. As another example, in a multiple-input multiple-output (MIMO) system, stream separation is performed by precoding.

When precoding is performed on the transmitting side, a peak to average power ratio (PAPR) increases due to signal superposition. A transmission signal is amplified by a power amplifier before being transmitted from an antenna, but when a signal with a high PAPR is input to the power amplifier, the signal is affected by a nonlinear characteristic of the power amplifier, and nonlinear distortion may occur. When the nonlinear distortion of the transmission signal occurs, there is a concern that communication with many errors will be performed.

Non Patent Literature 1 discloses a technique for reducing a PAPR in a wideband single-carrier MIMO system.

### [Citation List]

### [Non Patent Literature]

Non Patent Literature 1: Kuriyama et al., "PAPR Reduction on Wideband Single-Carrier MIMO Systems with Variable Tap-Length FIR Beamforming," Society Conference of the Institute of Electronics, Information and Communication Engineers, B-5-70, September 2021.

Non-Patent Literature 2: Satoshi SuyamaSATOSHI SUYAMA ET AL: "Subcarrier Phase Hopping MIMO-OFDM Transmission Employing Enhanced Selected Mapping for PAPR Reduction", PERSONAL, INDOOR AND MOBILE RADIO COMMUNICATIONS, 2006 IEEE 17TH INTER NATIONAL SYMPOSIUM ON, IEEE, PI, 1 September 2006 (2006-09-01), pages 1-5, XP031023789, ISBN: 978-1-4244-0329-5, describes a MIMO-OFDM transmission scheme combining SPH-SDM with an enhanced SLM. A controller selects from phase patterns a suboptimum phase pattern that can minimize the peak power every symbol, based on quantized-IFFT and peak detector outputs. To inform the receiver of the selected phase pattern, it is mapped into pilot subcarriers; the receiver detects the selected phase pattern by maximum ratio combining of pilot subcarriers and performs MMSE detection using the detected phase matrix.

Non-Patent Literature 3: BOONKAJAY AMNART ET AL: "A stream-wise blind selected mapping technique for low-PAPR multi-user MIMO transmission", 2017 IEEE/CIC INTERNATIONAL CONFERENCE ON COMMUNICATIONS IN CHINA (ICCC), IEEE, 22 October 2017 (2017-10-22), pages 1-6, XP033343466, DOI: 1 0.11 09/ICCCHINA.201 7.8330507, describes SLM without side information transmission, blind SLM for OFDM and SC transmissions. A phase rotation sequence is selected by a criterion minimizing PAPR, and phase rotation is carried out prior to transmit signal processing. At the receiver, phase rotation sequence estimation is employed after receive signal processing and is based on Euclidean distance calculation between the demapped signal and original constellations.

### [Patent Literature]

Patent Literature 1: US 2019/29681 9 A1 describes processing a signal in each spatial layer with a phase rotation value associated with the spatial layer in a phase rotation set. Precoding and phase rotation may be combined such that a precoding matrix is multiplied with a phase rotation matrix, yielding a modified precoding matrix where each precoding vector is multiplied by a phase rotating vector. Phase rotation values of a phase rotation set may be selected and preconfigured to satisfy a condition, and a phase rotation set is selected on the basis of the selected precoding configuration.

Patent Literature 2: US 2017/230224 A1describes a phase changing scheme in which phase changing values are prepared and the phase changing value is regularly switched in a period of N, to achieve better data reception quality. It also states that the same effects are obtainable using N phase changing values at random. Further, given modes for spatial multiplexing MIMO schemes, fixed precoding matrix, and schemes using a regular change of phase, the transmission device may select a transmission scheme

### SUMMARY OF INVENTION

### [Technical Problem]

As described above, when the transmitting side performs precoding on transmission data in wireless communication, the PAPR increases.

One object of the present invention is to provide a technique capable of reducing a PAPR when a transmitting side performs precoding on transmission data in wireless communication.

### [Solution to Problem]

The object of the invention is solved by the subject matter of the independent claims. Advantageous embodiments of the invention are disclosed independent claims. A first example relates to a wireless communication method for performing wireless communication between a transmission device and a reception device.

A second example relates to a wireless communication system.

A third example relates to a transmission device that performs wireless communication with a reception device.

### [Advantageous Effects of Invention]

According to the present invention, it is possible to reduce a PAPR when a transmitting side performs precoding on transmission data in wireless communication.

### BRIEF DESCRIPTION OF DRAWINGS

FIG. 1 is a conceptual diagram schematically illustrating a configuration of a wireless communication system according to an embodiment.
FIG. 2 is a block diagram illustrating a basic configuration example of a transmission device that performs precoding.
FIG. 3 is a conceptual diagram for describing amplification characteristics of an amplification unit.
FIG. 4 is a conceptual diagram for describing distortion of a constellation.
FIG. 5 is a conceptual diagram for describing a basis of a phase shift according to the embodiment.
FIG. 6 is a conceptual diagram for describing an outline of the phase shift according to the embodiment.
FIG. 7 is a conceptual diagram for describing an example of random phase shift according to the embodiment.
FIG. 8 is a conceptual diagram for describing signal addition processing according to the embodiment.
FIG. 9 is a conceptual diagram for describing an effect of the phase shift according to the embodiment.
FIG. 10 is a flowchart schematically illustrating processing by the transmission device according to the embodiment.
FIG. 11 is a block diagram illustrating a first configuration example of the transmission device according to the embodiment.
FIG. 12 is a block diagram illustrating a second configuration example of the transmission device according to the embodiment.
FIG. 13 is a block diagram illustrating a third configuration example of the transmission device according to the embodiment.
FIG. 14 is a block diagram illustrating a configuration example of a reception device according to the embodiment.

### DESCRIPTION OF EMBODIMENTS

Embodiments of the present invention will be described with reference to the accompanying drawings.

### 1. Outline of Wireless Communication System

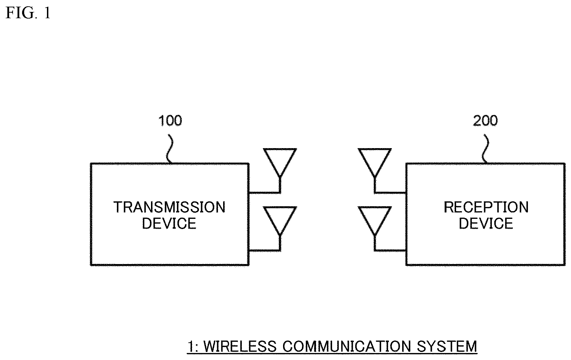

FIG. 1 is a conceptual diagram schematically illustrating a configuration of a wireless communication system 1 according to the present embodiment. The wireless communication system 1 includes a transmission device 100 and a reception device 200. The transmission device 100 and the reception device 200 perform wireless communication. The wireless communication system 1 may be a multiple-input multiple-output (MIMO) system, a single-input single-output (SISO) system, or another system. The wireless communication system 1 may perform single-carrier transmission or may perform multi-carrier transmission based on orthogonal frequency division multiplexing (OFDM) or the like.

The transmission device 100 performs precoding on the transmission data before transmitting the transmission data to the reception device 200. Precoding is a well-known technique. For example, when wideband transmission is performed in a frequency-selective fading environment, channel equalization is performed by precoding. As another example, in a MIMO system, stream separation is performed by precoding.

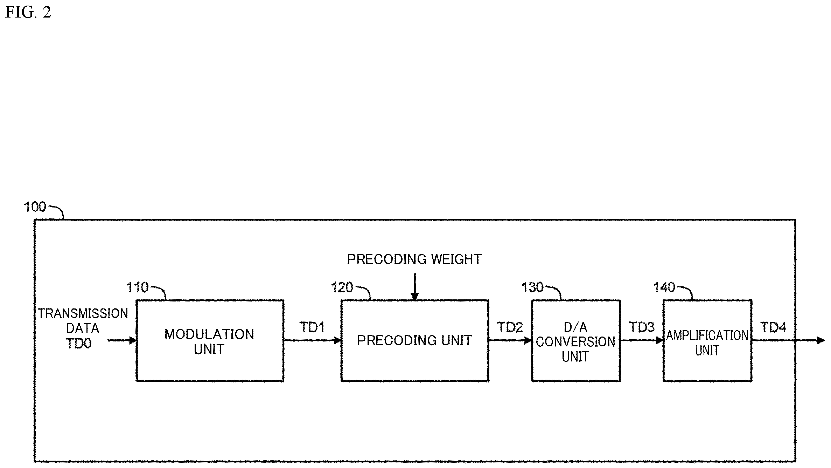

FIG. 2 is a block diagram illustrating a basic configuration example of the transmission device 100 that performs precoding. The transmission device 100 includes a modulation unit 110, a precoding unit 120, a D/A conversion unit 130, and an amplification unit 140.

The modulation unit 110 receives transmission data (a transmission signal) TD0 transmitted from the transmission device 100 to the reception device 200. The modulation unit 110 performs "modulation processing" for modulating the transmission data TD0 using a predetermined modulation scheme. Examples of the predetermined modulation scheme include quadrature amplitude modulation (QAM), quadrature phase shift keying (QPSK), and the like. The modulation unit 110 outputs transmission data TD1 after the modulation processing.

The precoding unit 120 receives the transmission data TD1 after the modulation processing. The precoding unit 120 performs "precoding processing" for performing precoding on the transmission data TD1. Various examples are known as precoding weights (precoding matrices) used in precoding processing. In the present embodiment, the precoding weights are not particularly limited. The precoding unit 120 outputs transmission data TD2 after the precoding processing.

The D/A conversion unit 130 receives the transmission data TD2 after the precoding processing. The D/A conversion unit 130 performs D/A conversion on the transmission data TD2 and outputs transmission data TD3.

The amplification unit 140 receives the transmission data TD3 after the D/A conversion. The amplification unit 140 includes a power amplifier, and performs "amplification processing" for amplifying the transmission data TD3.

Furthermore, the amplification unit 140 performs "transmission processing" for transmitting transmission data (a transmission signal) TD4 after the amplification processing to the reception device 200 via an antenna. The amplification unit 140 also functions as a "transmission unit" that performs transmission processing.

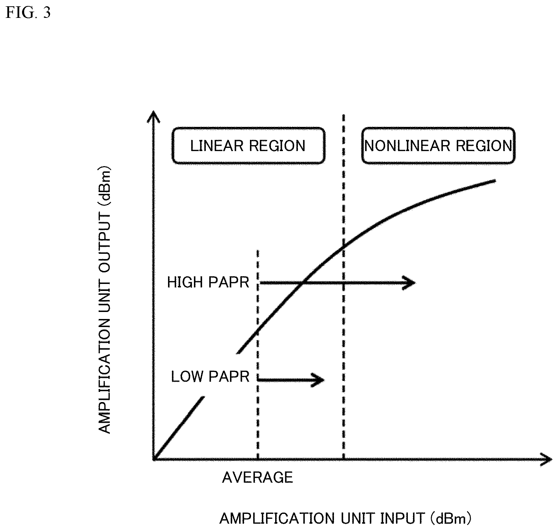

FIG. 3 is a conceptual diagram for describing amplification characteristics of the amplification unit 140. The horizontal axis represents input signal power, and the vertical axis represents output signal power. As illustrated in FIG. 3, the amplification characteristics include not only a linear region but also a nonlinear region, and the influence of the nonlinear characteristics increases as the input signal power increases. Even if the average power is included in the linear region, an input signal with a high peak to average power ratio (PAPR) is affected by the nonlinear characteristics. As a result, distortion of a constellation of transmission data may occur.

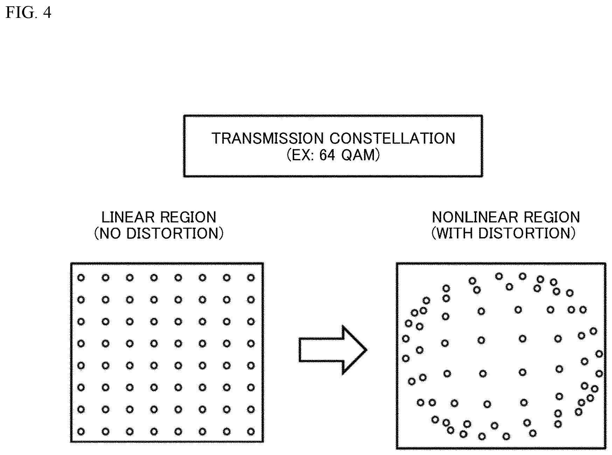

FIG. 4 is a conceptual diagram for describing distortion of a constellation of transmission data. Here, as an example, a constellation of transmission data in the case of 64 QAM is illustrated. There is no distortion in the constellation in the linear region. However, distortion occurs in the constellation in the nonlinear region.

As described above, in the present embodiment, the transmission device 100 (precoding unit 120) performs precoding on transmission data. Precoding with signal superposition tends to increase a PAPR. Therefore, transmission data (a transmission signal) with a high PAPR is input to the amplification unit 140, and there is a concern of nonlinear distortion occurring due to the influence of nonlinear characteristics. When the nonlinear distortion of the transmission data occurs, there is a concern that communication with many errors will be performed.

Therefore, the present embodiment provides a technique capable of reducing a PAPR when the transmission device 100 performs precoding on transmission data. The present embodiment introduces a "phase shift" described below to reduce a PAPR.

### 2. PAPR Reduction Using Phase Shift

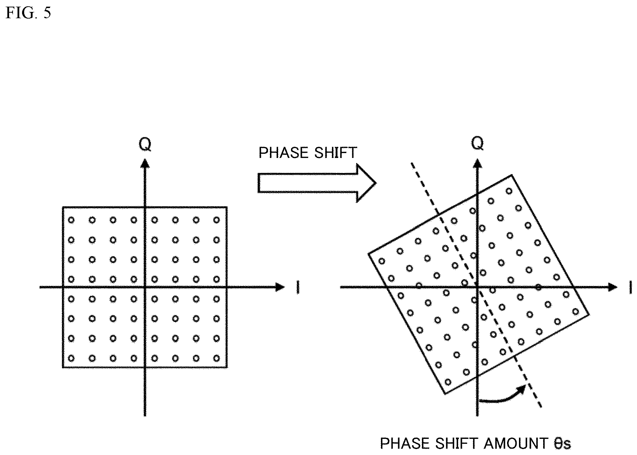

FIG. 5 is a conceptual diagram for describing a basis of a phase shift according to the present embodiment. Here, as an example, a case where the modulation scheme is 64 QAM is illustrated. However, the modulation scheme is not limited to 64 QAM.

The transmission device 100 (modulation unit 110) performs modulation processing for modulating transmission data using a predetermined modulation scheme. In this modulation processing, the transmission device 100 not only modulates the transmission data using a predetermined modulation scheme, but also applies a phase shift to the transmission data. The phase shift amount is θs. That is, in the modulation processing, the transmission device 100 modulates the transmission data using a predetermined modulation scheme, and further shifts the phase of the transmission data according to the phase shift amount θs.

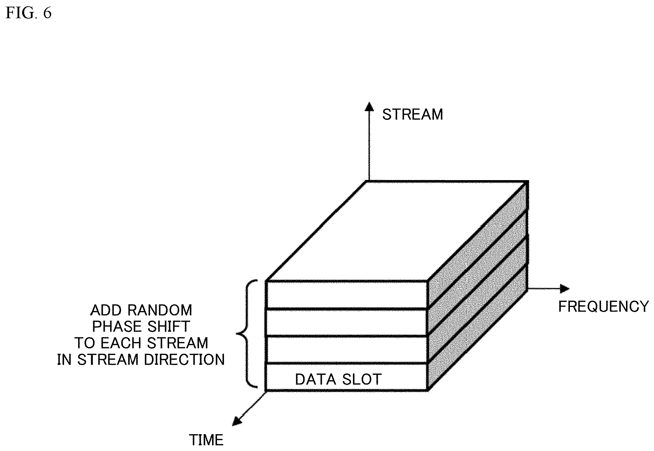

FIG. 6 is a conceptual diagram for describing an outline of the phase shift according to the present embodiment. According to the present embodiment, the transmission device 100 transmits transmission data using a plurality of streams. At that time, the transmission device 100 determines the phase shift amount θs for each stream of transmission data and performs phase shift. That is, the phase shift amount θs is separately determined in the stream direction, and the phase shift is performed according to the phase shift amount θs for each stream.

In addition, according to the present embodiment, the phase shift amount θs for each stream is random. That is, the transmission device 100 determines a random phase shift amount θs for each stream of transmission data.

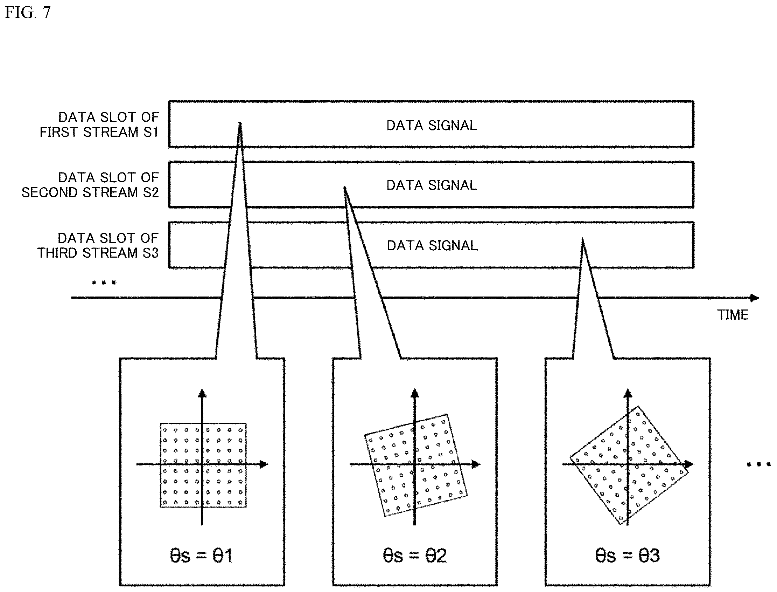

FIG. 7 is a conceptual diagram for describing an example of random phase shift according to the present embodiment. Phase shift is performed in a predetermined data unit (ex: frame, slot). The phase shift amount θs is determined randomly for each stream. In the example illustrated in FIG. 7, the phase shift amount θs for a first stream S1 is a first phase shift amount θ1, and the phase shift amount θs for a second stream S2 is a second phase shift amount θ2. The first phase shift amount θ1 and the second phase shift amount θ2 are different. The same applies when the number of streams is 3 or more.

Information indicating the random phase shift amount θs for each stream is hereinafter referred to as a "phase shift pattern PAT." The transmission device 100 acquires a phase shift pattern PAT. Further, the transmission device 100 determines a random phase shift amount θs for each stream on the basis of the phase shift pattern PAT. Thereafter, the transmission device 100 performs modulation processing according to the determined random phase shift amount θs, and further performs subsequent processing.

As a modification example, a plurality of types of phase shift patterns PAT may be used. The plurality of types of phase shift patterns PAT each indicate a different random phase shift amount θs. In this case, the transmission device 100 selects one from among a plurality of types of phase shift patterns PAT. For example, the transmission device 100 performs modulation processing using each of a plurality of types of phase shift patterns PAT, and further performs subsequent processing. Then, the transmission device 100 calculates a PAPR of the transmission data after the precoding processing by the precoding unit 120, and selects one that minimizes a PAPR from among the plurality of types of phase shift patterns PAT. As another example, the transmission device 100 may acquire information on reception quality (ex: a bit error rate (BER)) from the reception device 200 and select one that maximizes a reception quality from among the plurality of types of phase shift patterns PAT. Further, the transmission device 100 determines a random phase shift amount θs for each stream on the basis of the selected one phase shift pattern PAT. Thereafter, the transmission device 100 performs modulation processing according to the determined random phase shift amount θs, and further performs subsequent processing.

The range that the random phase shift amount θs can take can be freely set. After the random phase shift amount θs is generated, rounding to an integer may be performed.

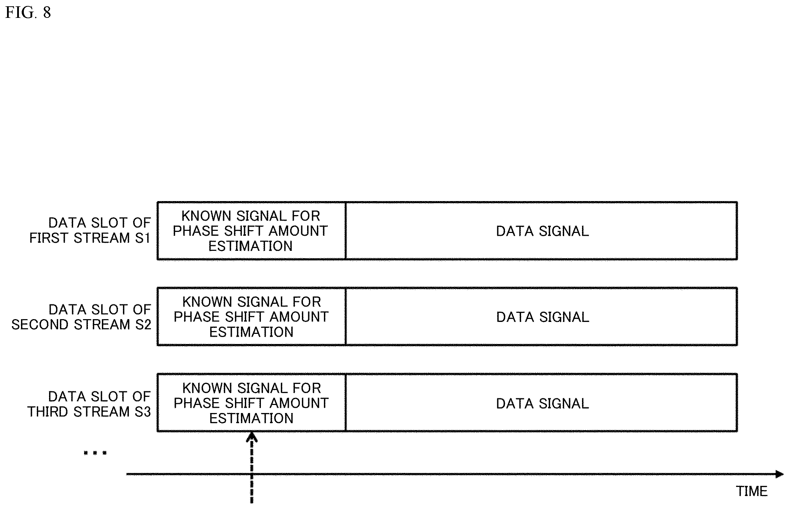

FIG. 8 is a conceptual diagram for describing "signal addition processing" according to the present embodiment. The reception device 200 needs to estimate the random phase shift amount θs (that is, the phase shift pattern PAT) applied to the transmission data in the transmission device 100. Therefore, the transmission device 100 adds a known signal to be used in the reception device 200 for its estimation to each stream of the transmission data. More specifically, the transmission device 100 adds a known signal to the head or end of a predetermined data unit (ex: frame, slot). The known signal includes one or more symbols.

The reception device 200 receives the transmission data transmitted from the transmission device 100 as reception data. The reception device 200 estimates the random phase shift amount θs (that is, the phase shift pattern PAT) applied in the transmission device 100 on the basis of the known signal added to the reception data. Specifically, the reception device 200 compares the known signal added to the reception data with a known signal held by the reception device 200 to estimate the random phase shift amount θs. Then, the reception device 200 demodulates the reception data in consideration of the estimated phase shift amount θs. That is, when demodulating the reception data, the reception device 200 returns the phase by the phase shift amount θs for each stream included in the reception data.

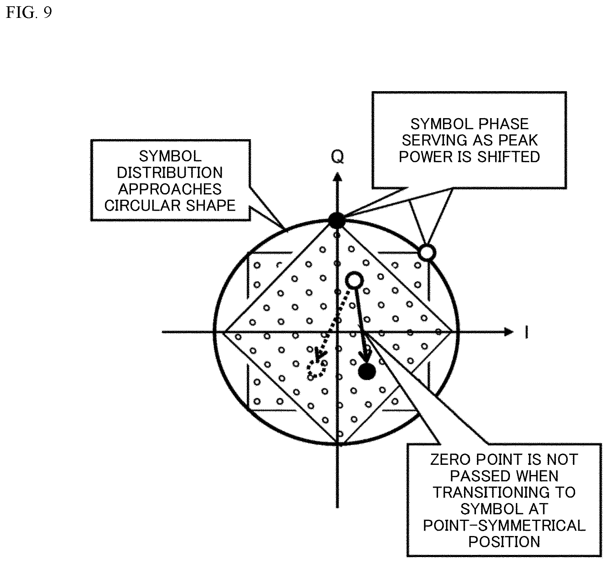

FIG. 9 is a conceptual diagram for describing an effect of the phase shift according to the present embodiment. As illustrated in FIG. 9, the distribution (symbol distribution) of the symbol sequence in the constellation becomes closer to a circular shape due to the phase shift. Since the symbol phase causing the peak power is shifted, the peak power decreases at the time of signal superposition by precoding. Furthermore, since the zero point is not passed when transitioning to a symbol at a point-symmetrical position, the average power increases as compared with the case where no phase shift is performed. In this way, the PAPR can be reduced by performing the phase shift during the modulation processing of the transmission data.

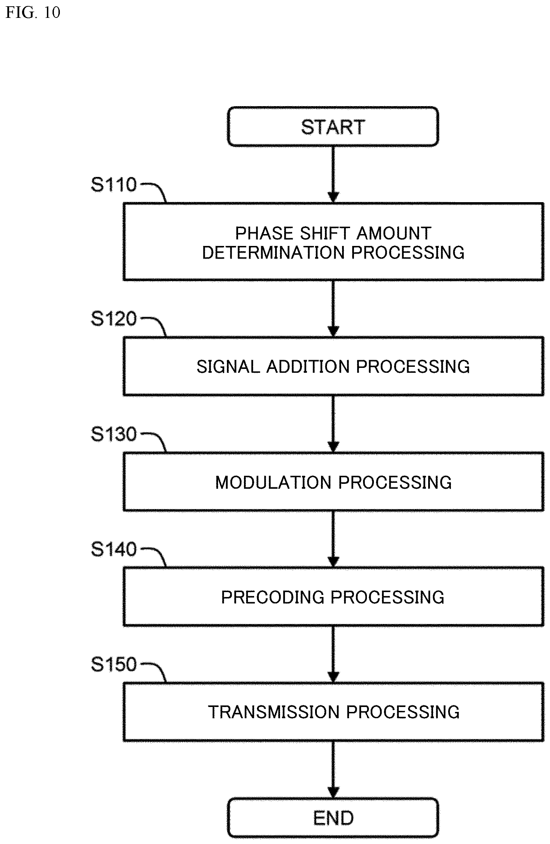

FIG. 10 is a flowchart schematically illustrating processing by the transmission device 100 according to the present embodiment.

In Step S110, the transmission device 100 performs "phase shift amount determination processing." That is, the transmission device 100 determines a random phase shift amount θs for each stream of transmission data. More specifically, the transmission device 100 acquires a phase shift pattern PAT indicating a random phase shift amount θs for each stream, and determines the random phase shift amount θs for each stream on the basis of the phase shift pattern PAT.

In Step S120, the transmission device 100 performs "signal addition processing" on the transmission data. More specifically, the transmission device 100 adds a known signal used in the reception device 200 to estimate the random phase shift amount θs to each stream.

In Step S130, the transmission device 100 performs "modulation processing" on the transmission data. More specifically, the transmission device 100 modulates the transmission data using a predetermined modulation scheme, and further shifts the phase according to the random phase shift amount θs for each stream. At this time, the phase shift is also performed on the known signal added to the transmission data.

In Step S140, the transmission device 100 performs "precoding processing" on the transmission data. More specifically, the transmission device 100 performs precoding on the transmission data after the modulation processing.

In Step S150, the transmission device 100 performs "transmission processing" for transmitting the transmission data after the precoding processing from the transmission device to the reception device.

Note that, during communication, the transmission device 100 may appropriately update the phase shift pattern PAT. At the time of update, the transmission device 100 may review all types of phase shift patterns PAT again and select one from among the all types of phase shift patterns PAT. Alternatively, the transmission device 100 may review only a certain number of phase shift patterns PAT that were relatively excellent last time, and select one from among the certain number of phase shift patterns PAT.

As described above, according to the present embodiment, it is possible to reduce the PAPR when precoding is performed by applying the phase shift to the transmission data.

### 3. Configuration Examples

Configuration examples of the transmission device 100 and the reception device 200 will be described below.

### 3-1. Configuration Example of Transmission Device

### 3-1-1. First Configuration Example

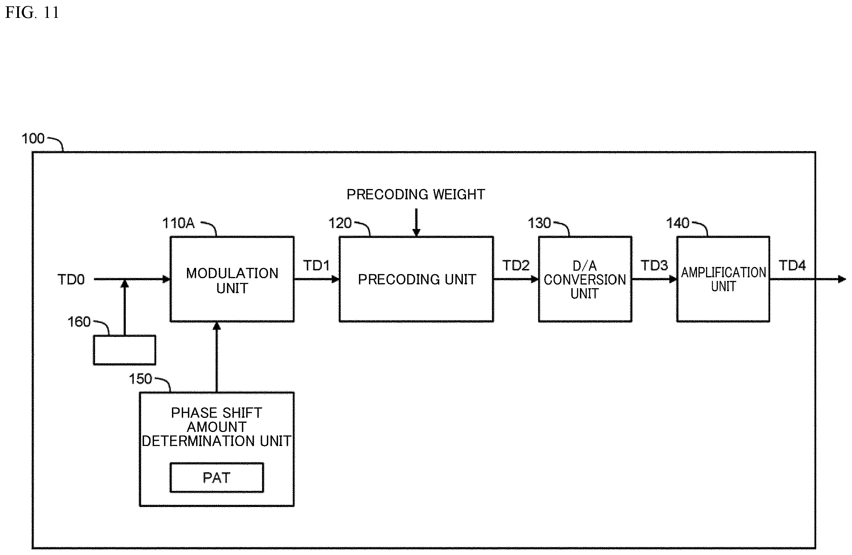

FIG. 11 is a block diagram illustrating a first configuration example of the transmission device 100. The transmission device 100 includes a modulation unit 110A, a precoding unit 120, a D/A conversion unit 130, an amplification unit 140, a phase shift amount determination unit 150, and a signal addition unit 160. The modulation unit 110A has a phase shift function in addition to the function of the modulation unit 110 illustrated in FIG. 2. The precoding unit 120, the D/A conversion unit 130, and the amplification unit 140 are similar to those illustrated in FIG. 2.

The phase shift amount determination unit 150 performs "phase shift amount determination processing." That is, the phase shift amount determination unit 150 determines the random phase shift amount θs for each stream of the transmission data TD0.

More specifically, the phase shift amount determination unit 150 acquires a phase shift pattern PAT indicating a random phase shift amount θs for each stream. Further, the phase shift amount determination unit 150 determines a random phase shift amount θs for each stream on the basis of the phase shift pattern PAT. Further, the phase shift amount determination unit 150 notifies the modulation unit 110A of the random phase shift amount θs for each stream.

The signal addition unit 160 performs "signal addition processing." More specifically, the signal addition unit 160 adds a known signal used in the reception device 200 to estimate the random phase shift amount θs to each stream (see FIG. 8). For example, the signal addition unit 160 adds a known signal to the head or end of a predetermined data unit (ex: frame, slot).

The modulation unit 110A receives information on the random phase shift amount θs for each stream from the phase shift amount determination unit 150. In the modulation processing, the modulation unit 110A modulates the transmission data TD0 using a predetermined modulation scheme, and further shifts the phase according to the random phase shift amount θs for each stream (see FIG. 7). At this time, the modulation unit 110A performs phase shift also to the added known signal. Further, the modulation unit 110A outputs the transmission data TD1 after the modulation processing.

### 3-1-2. Second Configuration Example

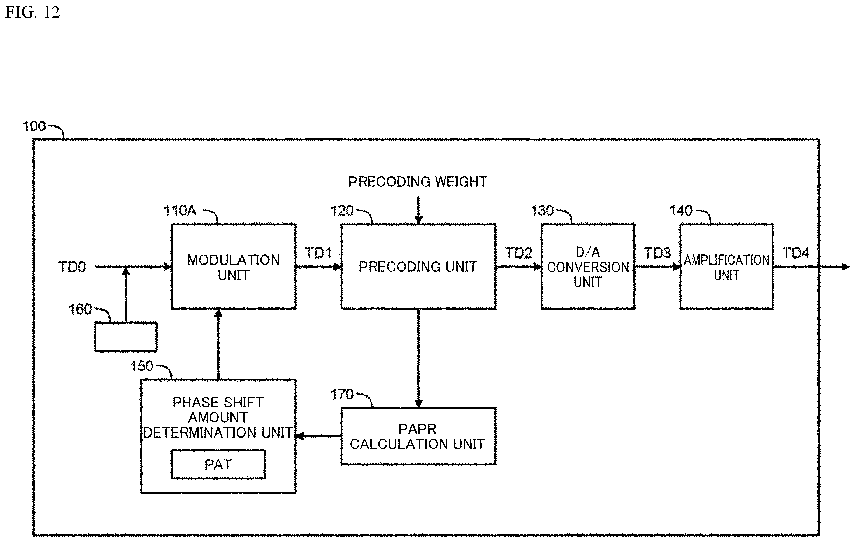

FIG. 12 is a block diagram illustrating a second configuration example of the transmission device 100. The descriptions overlapping with those of the first configuration example illustrated in FIG. 11 will be appropriately omitted. The transmission device 100 further includes a PAPR calculation unit 170 in addition to the first configuration example illustrated in FIG. 11.

The phase shift amount determination unit 150 acquires a plurality of types of phase shift patterns PAT. The plurality of types of phase shift patterns PAT each indicate a different random phase shift amount θs. The phase shift amount determination unit 150 temporarily selects a plurality of types of phase shift patterns PAT one by one in order. The phase shift amount determination unit 150 determines a random phase shift amount θs for each stream on the basis of the temporarily selected phase shift pattern PAT. Further, the phase shift amount determination unit 150 notifies the modulation unit 110A of the random phase shift amount θs for each stream.

The modulation unit 110A performs modulation processing in the same manner as in the case of the first configuration example. The precoding unit 120 receives the transmission data TD1 after the modulation processing. The precoding unit 120 performs precoding on the transmission data TD1 and outputs transmission data TD2.

The PAPR calculation unit 170 receives the transmission data TD2 after the precoding processing. The PAPR calculation unit 170 calculates a PAPR of the transmission data TD2 in a predetermined data unit according to a predetermined calculation formula. The PAPR calculation unit 170 outputs information on the calculated PAPR to the phase shift amount determination unit 150.

The phase shift amount determination unit 150 acquires information on the PAPR for each of a plurality of types of phase shift patterns PAT. Then, the phase shift amount determination unit 150 selects one that minimizes a PAPR from among the plurality of types of phase shift patterns PAT. The phase shift amount determination unit 150 determines the random phase shift amount θs for each stream according to the selected one phase shift pattern PAT. Further, the phase shift amount determination unit 150 notifies the modulation unit 110A of the determined random phase shift amount θs for each stream. Thereafter, the modulation unit 110A performs modulation processing by using the random phase shift amount θs notified from the phase shift amount determination unit 150.

### 3-1-3. Third Configuration Example

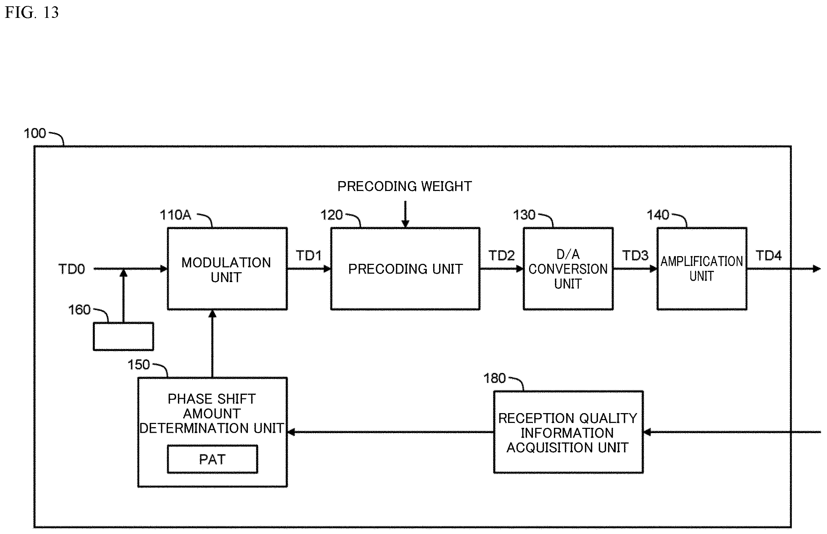

FIG. 13 is a block diagram illustrating a third configuration example of the transmission device 100. The descriptions overlapping with those of the second configuration example illustrated in FIG. 12 will be appropriately omitted.

In the third configuration example, the transmission device 100 includes a reception quality information acquisition unit 180 instead of the PAPR calculation unit 170. The reception quality information acquisition unit 180 acquires information on the reception quality (ex: BER) of the transmission data from the reception device 200. The reception quality information acquisition unit 180 outputs the information on the reception quality to the phase shift amount determination unit 150.

The phase shift amount determination unit 150 acquires information on the reception quality for each of a plurality of types of phase shift patterns PAT. Then, the phase shift amount determination unit 150 selects one that maximizes a reception quality from among the plurality of types of phase shift patterns PAT. The phase shift amount determination unit 150 determines the random phase shift amount θs for each stream according to the selected one phase shift pattern PAT. Further, the phase shift amount determination unit 150 notifies the modulation unit 110A of the determined random phase shift amount θs for each stream. Thereafter, the modulation unit 110A performs modulation processing by using the random phase shift amount θs notified from the phase shift amount determination unit 150.

### 3-1-4. Hardware Configuration Example

The transmission device 100 includes one or more processors (hereinafter simply referred to as a "processor") and one or more storage devices (hereinafter simply referred to as a "storage device"). For example, the processor includes a central processing unit (CPU). The storage device stores various types of information necessary for processing by the processor. Examples of the storage device include a volatile memory, a non-volatile memory, a hard disk drive (HDD), a solid state drive (SSD), and the like.

The processor may execute a control program, which is a computer program. The control program is stored in the storage device. The control program may be recorded in a computer-readable recording medium. The function of the processor is implemented by the processor executing the control program.

Information on a plurality of types of phase shift patterns PAT prepared in advance is stored in the storage device. Functions of the modulation unit 110A, the precoding unit 120, the phase shift amount determination unit 150, the signal addition unit 160, the PAPR calculation unit 170, the reception quality information acquisition unit 180, and the like are implemented through cooperation between the processor and the storage device.

### 3-2. Configuration Example of Reception Device

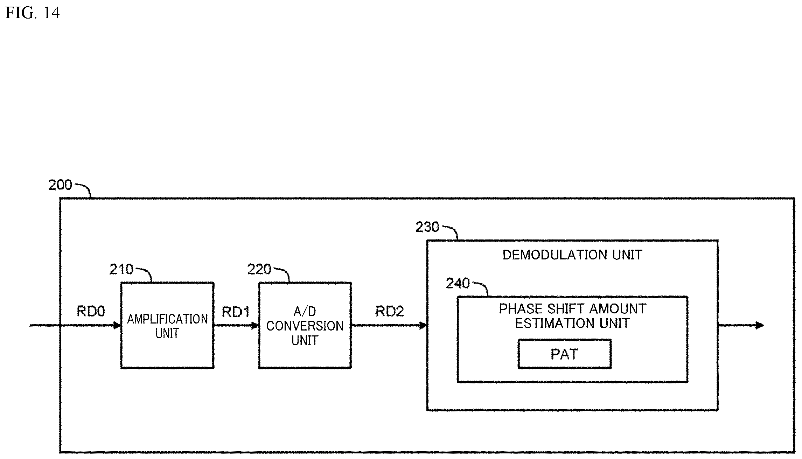

FIG. 14 is a block diagram illustrating a configuration example of the reception device 200. The reception device 200 includes an amplification unit 210, an A/D conversion unit 220, and a demodulation unit 230.

The reception device 200 receives the transmission data transmitted from the transmission device 100 as reception data (reception signal) RD0. The amplification unit 210 amplifies the reception data RD0 and outputs reception data RD1. The A/D conversion unit 220 performs A/D conversion on the reception data RD1 and outputs reception data RD2.

The demodulation unit 230 performs "demodulation processing" for demodulating the reception data RD2. At this time, the demodulation unit 230 demodulates the reception data RD2 in consideration of the phase shift amount θs.

More specifically, the demodulation unit 230 includes a phase shift amount estimation unit 240. The phase shift amount estimation unit 240 estimates the random phase shift amount θs (that is, the phase shift pattern PAT) applied in the transmission device 100 on the basis of the known signal added to the reception data RD2. Specifically, the phase shift amount estimation unit 240 compares the known signal added to the reception data RD2 with a known signal held by the phase shift amount estimation unit 240 to estimate the random phase shift amount θs. Then, the demodulation unit 230 demodulates the reception data RD2 in consideration of the estimated phase shift amount θs. That is, the demodulation unit 230 demodulates the reception data RD2 using a predetermined demodulation scheme, and returns the phase by the phase shift amount θs for each stream.

The reception device 200 includes one or more processors (hereinafter simply referred to as a "processor") and one or more storage devices (hereinafter simply referred to as a "storage device"). The processor may execute a control program, which is a computer program. The control program is stored in the storage device. The control program may be recorded in a computer-readable recording medium. The function of the processor is implemented by the processor executing the control program. Functions of the demodulation unit 230, the phase shift amount estimation unit 240, and the like are implemented through cooperation between the processor and the storage device.

### [Reference Signs List]

- 1: Wireless communication system
- 100: Transmission device
- 110, 110A: Modulation unit
- 120: Precoding unit
- 130: D/A conversion unit
- 140: Amplification unit
- 150: Phase shift amount determination unit
- 160: Signal addition unit
- 170: PAPR calculation unit
- 180: Reception quality information acquisition unit
- 200: Reception device
- 210: Amplification unit
- 220: A/D conversion unit
- 230: Demodulation unit
- 240: Phase shift amount estimation unit
- PAT: Phase shift pattern

## Claims

1. A wireless communication method for performing wireless communication between a transmission device (100) and a reception device (200),
the wireless communication method comprising:
phase shift amount determination processing that acquires information on reception quality for each of a plurality of types of phase shift patterns, PAT, from the reception device (200), each of the plurality of types of phase shift patterns indicating a random phase shift amount for each of streams of transmission data, selects one phase shift pattern, PAT, that maximizes the reception quality from among the plurality of types of phase shift patterns, PAT, and determines from the selected phase shift pattern the random phase shift amount (θs) for each of the streams;
modulation processing that modulates the transmission data and further shifts a phase according to the random phase shift amount (θs) for each of the streams;
precoding processing that performs precoding on the transmission data after the modulation processing; and
transmission processing that transmits the transmission data after the precoding processing from the transmission device (100) to the reception device (200).

2. The wireless communication method according to claim 1, further comprising signal addition processing that adds a known signal, which is to be used in the reception device (200) for estimating the random phase shift amount(θs), to the streams of the transmission data.

3. The wireless communication method according to claim 2, further comprising:
receiving, by the reception device (200), the transmission data transmitted from the transmission device (100) as reception data;
estimating, by the reception device (200), the random phase shift amount (θs) based on the known signal; and
demodulation processing that demodulates the reception data based on the estimated phase shift amount (θs).

4. A wireless communication system (1) comprising:
a transmission device (100); and
a reception device (200), wherein
the transmission device (100) is configured to execute:
phase shift amount determination processing that acquires information on reception quality for each of a plurality of types of phase shift patterns, PAT, from the reception device (200), each of the plurality of types of phase shift patterns indicating a random phase shift amount for each of streams of transmission data, selects one phase shift pattern, PAT, that maximizes the reception quality from among the plurality of types of phase shift patterns, PAT, and determines from the selected phase shift pattern the random phase shift amount (θs) for each of the streams;
modulation processing that modulates the transmission data and further shifts a phase according to the random phase shift amount (θs) for each of the streams;
precoding processing that performs precoding on the transmission data after the modulation processing; and
transmission processing that transmits the transmission data after the precoding processing from the transmission device (100) to the reception device (200).

5. The wireless communication system (1) according to claim 4, wherein
the transmission device (100) is further configured to execute signal addition processing that adds a known signal, which is to be used in the reception device (200) for estimating the random phase shift amount (θs), to the streams of the transmission data, and
the reception device (200) is configured to:
receive the transmission data transmitted from the transmission device (100) as reception data;
estimate the random phase shift amount (θs) based on the known signal; and
demodulate the reception data based on the estimated phase shift amount (θs).

6. A transmission device (100) that performs wireless communication with a reception device (200),
the transmission device (100) comprising:
a phase shift amount determination unit configured to acquire information on reception quality for each of a plurality of types of phase shift patterns, PAT, from the reception device (200), each of the plurality of types of phase shift patterns indicating a random phase shift amount for each of streams of transmission data, to select one phase shift pattern, PAT, that maximizes the reception quality from among the plurality of types of phase shift patterns, PAT, and to determine from the selected phase shift pattern the random phase shift amount (θs) for each of the streams;
a modulation unit configured to modulate the transmission data and to further shift a phase according to the random phase shift amount (θs) for each of the streams;
a precoding unit configured to perform precoding on the transmission data after modulation; and
a transmission unit configured to transmit the transmission data after the precoding to the reception device (200).

## Patentansprüche

1. Drahtloskommunikationsverfahren zum Durchführen von Drahtloskommunikation zwischen einer Übertragungsvorrichtung (100) und einer Empfangsvorrichtung (200),
wobei das Drahtloskommunikationsverfahren Folgendes umfasst:
eine Verarbeitung zur Bestimmung des Phasenverschiebungsbetrags, die Informationen über die Empfangsqualität für jede einer Vielzahl von Arten von Phasenverschiebungsmustern, PAT, von der Empfangsvorrichtung (200) erwirbt, wobei jede der Vielzahl von Arten von Phasenverschiebungsmustern einen zufälligen Phasenverschiebungsbetrag für jeden von Streams von Übertragungsdaten angibt, aus der Vielzahl von Arten von Phasenverschiebungsmustern, PAT, ein Phasenverschiebungsmuster, PAT, auswählt, das die Empfangsqualität maximiert, und aus dem ausgewählten Phasenverschiebungsmuster den zufälligen Phasenverschiebungsbetrag (θs) für jeden der Streams bestimmt;
eine Modulationsverarbeitung, die die Übertragungsdaten moduliert und weiter eine Phase gemäß dem zufälligen Phasenverschiebungsbetrag (θs) für jeden der Streams verschiebt;
eine Vorkodierungsverarbeitung, die eine Vorkodierung an den Übertragungsdaten nach der Modulationsverarbeitung durchführt; und
eine Übertragungsverarbeitung, die die Übertragungsdaten nach der Vorkodierungsverarbeitung von der Übertragungsvorrichtung (100) an die Empfangsvorrichtung (200) überträgt.

2. Drahtloskommunikationsverfahren nach Anspruch 1, weiter umfassend eine Signalhinzufügungsverarbeitung, die ein bekanntes Signal, das in der Empfangsvorrichtung (200) zum Schätzen des zufälligen Phasenverschiebungsbetrags (θs) verwendet werden soll, zu den Streams der Übertragungsdaten hinzufügt.

3. Drahtloskommunikationsverfahren nach Anspruch 2, weiter umfassend:
Empfangen, durch die Empfangsvorrichtung (200), der von der Übertragungsvorrichtung (100) übertragenen Übertragungsdaten als Empfangsdaten;
Schätzen, durch die Empfangsvorrichtung (200), des zufälligen Phasenverschiebungsbetrags (θs) basierend auf dem bekannten Signal; und
eine Demodulationsverarbeitung, die die Empfangsdaten basierend auf dem geschätzten Phasenverschiebungsbetrag (θs) demoduliert.

4. Drahtloskommunikationssystem (1), umfassend:
eine Übertragungsvorrichtung (100); und
eine Empfangsvorrichtung (200), wobei
die Übertragungsvorrichtung (100) konfiguriert ist, Folgendes auszuführen:
eine Verarbeitung zur Bestimmung des Phasenverschiebungsbetrags, die Informationen über die Empfangsqualität für jede einer Vielzahl von Arten von Phasenverschiebungsmustern, PAT, von der Empfangsvorrichtung (200) erwirbt, wobei jede der Vielzahl von Arten von Phasenverschiebungsmustern einen zufälligen Phasenverschiebungsbetrag für jeden von Streams von Übertragungsdaten angibt, aus der Vielzahl von Arten von Phasenverschiebungsmustern, PAT, ein Phasenverschiebungsmuster, PAT, auswählt, das die Empfangsqualität maximiert, und aus dem ausgewählten Phasenverschiebungsmuster den zufälligen Phasenverschiebungsbetrag (θs) für jeden der Streams bestimmt;
eine Modulationsverarbeitung, die die Übertragungsdaten moduliert und weiter eine Phase gemäß dem zufälligen Phasenverschiebungsbetrag (θs) für jeden der Streams verschiebt;
eine Vorkodierungsverarbeitung, die eine Vorkodierung an den Übertragungsdaten nach der Modulationsverarbeitung durchführt; und
eine Übertragungsverarbeitung, die die Übertragungsdaten nach der Vorkodierungsverarbeitung von der Übertragungsvorrichtung (100) an die Empfangsvorrichtung (200) überträgt.

5. Drahtloskommunikationssystem (1) nach Anspruch 4, wobei
die Übertragungsvorrichtung (100) weiter konfiguriert ist, eine Signalhinzufügungsverarbeitung auszuführen, die ein bekanntes Signal, das in der Empfangsvorrichtung (200) zum Schätzen des zufälligen Phasenverschiebungsbetrags (θs) verwendet werden soll, zu den Streams der Übertragungsdaten hinzufügt, und
die Empfangsvorrichtung (200) konfiguriert ist:
die von der Übertragungsvorrichtung (100) übertragenen Übertragungsdaten als Empfangsdaten zu empfangen;
den zufälligen Phasenverschiebungsbetrag (θs) basierend auf dem bekannten Signal zu schätzen; und
die Empfangsdaten basierend auf dem geschätzten Phasenverschiebungsbetrag (θs) zu demodulieren.

6. Übertragungsvorrichtung (100), die Drahtloskommunikation mit einer Empfangsvorrichtung (200) durchführt,
wobei die Übertragungsvorrichtung (100) Folgendes umfasst:
eine Einheit zur Bestimmung des Phasenverschiebungsbetrags, die konfiguriert ist, Informationen über die Empfangsqualität für jede einer Vielzahl von Arten von Phasenverschiebungsmustern, PAT, von der Empfangsvorrichtung (200) zu erwerben, wobei jede der Vielzahl von Arten von Phasenverschiebungsmustern einen zufälligen Phasenverschiebungsbetrag für jeden von Streams von Übertragungsdaten angibt, aus der Vielzahl von Arten von Phasenverschiebungsmustern, PAT, ein Phasenverschiebungsmuster, PAT, auszuwählen, das die Empfangsqualität maximiert, und aus dem ausgewählten Phasenverschiebungsmuster den zufälligen Phasenverschiebungsbetrag (θs) für jeden von Streams zu bestimmen;
eine Modulationseinheit, die konfiguriert ist, die Übertragungsdaten zu modulieren und weiter eine Phase gemäß dem zufälligen Phasenverschiebungsbetrag (θs) für jeden der Streams zu verschieben;
eine Vorkodierungseinheit, die konfiguriert ist, eine Vorkodierung an den Übertragungsdaten nach der Modulation durchzuführen; und
eine Übertragungseinheit, die konfiguriert ist, die Übertragungsdaten nach der Vorkodierung an die Empfangsvorrichtung (200) zu übertragen.

## Revendications

1. Procédé de communication sans fil pour réaliser une communication sans fil entre un dispositif de transmission (100) et un dispositif de réception (200),
le procédé de communication sans fil comprenant :
un processus de détermination de quantité de décalage de phase qui acquiert des informations sur la qualité de réception pour chaque type d'une pluralité de types de motifs de décalage de phase, PAT, à partir du dispositif de réception (200), chacun de la pluralité de types de motifs de décalage de phase indiquant une quantité de décalage de phase aléatoire pour chacun des flux de données de transmission, la sélection d'un motif de décalage de phase, PAT, qui maximise la qualité de réception parmi la pluralité de types de motifs de décalage de phase, PAT, et détermine, à partir du motif de décalage de phase sélectionné, la quantité de décalage de phase aléatoire (θs) pour chacun des flux ;
un processus de modulation qui module les données de transmission et en outre décale une phase selon la quantité de décalage de phase aléatoire (θs) pour chacun des flux ;
un processus de précodage qui réalise un précodage sur les données de transmission après le processus de modulation ; et
un processus de transmission qui transmet les données de transmission après le processus de précodage du dispositif de transmission (100) au dispositif de réception (200).

2. Procédé de communication sans fil selon la revendication 1, comprenant en outre un processus d'ajout de signal qui ajoute un signal connu, qui doit être utilisé dans le dispositif de réception (200) pour estimer la quantité de décalage de phase aléatoire (θs), aux flux des données de transmission.

3. Procédé de communication sans fil selon la revendication 2, comprenant en outre :
la réception, par le dispositif de réception (200), des données de transmission transmises depuis le dispositif de transmission (100) en tant que données de réception ;
l'estimation, par le dispositif de réception (200), de la quantité de décalage de phase aléatoire (θs) sur la base du signal connu ; et
un processus de démodulation qui démodule les données de réception sur la base de la quantité de décalage de phase estimé (θs).

4. Système de communication sans fil (1) comprenant :
un dispositif de transmission (100) ; et
un dispositif de réception (200), dans lequel
le dispositif de transmission (100) est configuré pour mettre en œuvre :
un processus de détermination de quantité de décalage de phase qui acquiert des informations sur la qualité de réception pour chaque type d'une pluralité de types de motifs de décalage de phase, PAT, à partir du dispositif de réception (200), chacun de la pluralité de types de motifs de décalage de phase indiquant une quantité de décalage de phase aléatoire pour chacun des flux de données de transmission, la sélection d'un motif de décalage de phase, PAT, qui maximise la qualité de réception parmi la pluralité de types de motifs de décalage de phase, PAT, et détermine, à partir du motif de décalage de phase sélectionné, la quantité de décalage de phase aléatoire (θs) pour chacun des flux ;
un processus de modulation qui module les données de transmission et en outre décale une phase selon la quantité de décalage de phase aléatoire (θs) pour chacun des flux ;
un processus de précodage qui réalise un précodage sur les données de transmission après le processus de modulation ; et
un processus de transmission qui transmet les données de transmission après le processus de précodage du dispositif de transmission (100) au dispositif de réception (200).

5. Système de communication sans fil (1) selon la revendication 4, dans lequel
le dispositif de transmission (100) est en outre configuré pour mettre en œuvre un processus d'ajout de signal qui ajoute un signal connu, qui doit être utilisé dans le dispositif de réception (200) pour estimer la quantité de décalage de phase aléatoire (θs), aux flux des données de transmission, et
le dispositif de réception (200) est configuré pour :
la réception des données de transmission transmises depuis le dispositif de transmission (100) en tant que données de réception ;
l'estimation de la quantité de décalage de phase aléatoire (θs) sur la base du signal connu ; et la démodulation des données de réception sur la base de la quantité de décalage de phase estimé (θs).

6. Dispositif de transmission (100) qui réalise une communication sans fil avec un dispositif de réception (200),
le dispositif de transmission (100) comprenant :
une unité de détermination de quantité de décalage de phase configurée pour acquérir des informations sur la qualité de réception pour chaque type d'une pluralité de types de motifs de décalage de phase, PAT, à partir du dispositif de réception (200), chacun de la pluralité de types de motifs de décalage de phase indiquant une quantité de décalage de phase aléatoire pour chacun des flux de données de transmission, pour sélectionner un motif de décalage de phase, PAT, qui maximise la qualité de réception parmi la pluralité de types de motifs de décalage de phase, PAT, et pour déterminer à partir du motif de décalage de phase sélectionné la quantité de décalage de phase aléatoire (θs) pour chacun des flux ;
une unité de modulation configurée pour moduler les données de transmission et pour en outre décaler une phase selon la quantité de décalage de phase aléatoire (θs) pour chacun des flux ;
une unité de précodage configurée pour réaliser un précodage sur les données de transmission après modulation ; et
une unité de transmission configurée pour transmettre les données de transmission après le précodage au dispositif de réception (200).
